# EUROPEAN PATENT SPECIFICATION

(11) **EP 1 082 724 B1**
(45) Date of publication and mention of the grant of the patent: **04.09.2002**
(21) Application number: 99923406.5
(22) Date of filing: 27.05.1999
(51) Int. Cl.: G11B 33/02, B65D 85/57

(54) **A BOX FOR STORING A STORAGE MEDIUM**
AUFBEWAHRUNGSBEHÄLTER FÜR SPEICHERMEDIUM
BOITIER CON U POUR STOCKER UN SUPPORT D'ENREGISTREMENT

(30) Priority: 27.05.1998 DK 73498
(43) Date of publication of application: 14.03.2001
(73) Proprietor: LEGO A/S, 7190 Billund (DK); Interlego A.G., 6340 Baar (CH)
(72) Inventor: KALCHER, Conny, Oxon RG9 4AX (GB)
(74) Representative: Sigh, Erik
(86) International application number: DK9900285
(87) International publication number: WO99062066

(56) References cited:
- WO-A1-95/17752
- US-A- 4 702 369
- US-A- 5 366 073
- US-A- 5 425 450
- US-A- 5 518 112

## Description

This invention concerns a box for storing a storage medium. The storage medium can be a CD, a CDROM, an audio cassette tape (also called MC), a video cassette tape, or other. All of these types of storage media are usually stored in individual storage boxes having the general shape of a rectangular box.

Taking music CDs or CDROMs as an example, these CDs have the same physical dimensions and are stored in the same type of boxes often referred to as "jewel boxes". In a stack of several jewel boxes, the individual boxes can easily slip or shift relative to each other, and an untidy stack will result, and furthermore, the whole stack can topple. There is thus a need for means for stabilising a stack of several jewel boxes and securing their relative position in an aligned vertical stack.

In retail stores displaying CDs or CDROMs for sale and in public libraries displaying CDs or CDROMs for loan, several jewel boxes are today placed in a row in a box or a frame allowing the customer or the borrower to flip through the row of jewel boxes viewing their front sides individually. This is time consuming and when only a few jewel boxes are left in the frame, the jewel boxes tend to turn over and lie flat instead of standing.

The above can also be said about cassettes for MCs or for video cassette tapes.

WO 95/17752 discloses a box for storing a CD. That box has two opposing main walls. The outer surface of one main wall is provided with two elements, and the outer surface of the other main wall is provided with two mating elements such that, when two boxes are placed with the main walls against each other, the elements of one box fit into the mating ones of the neighbouring box. Such boxes can be stacked in straight alignment only.

Boxes according to the invention as defined in claim 1 can be neatly stacked in vertical alignment with each other, and the stack is furthermore stabilised. When placed side by side the boxes are kept tidily aligned in a straight row.

Boxes according to the invention can also be offset or shifted in a stack. Instead of placing the boxes vertically in a row arranged for display, the boxes can alternatively be tilted, and the studs and cavities interact to stabilise the row of tilted boxes, whereby no supporting structure is needed, such as a frame surrounding the row of jewel boxes or an open top box in which they are placed. Furthermore, a portion of the front face of each box in the row of tilted boxes is revealed. This portion can be used for displaying information about the CD or CDROM, such as the title.

In the following the invention will be explained with reference to the figures wherein
Figure 1 is a top perspective view of a jewel box for storing a CD or a CDROM,
Figure 2 is a bottom perspective view of the jewel box in figure 1,
Figure 3 shows a stack of three boxes of figure 1 seen fron the back, and
Figure 4 is a perspective view of a row of three boxes of figure 1 in an offset arrangement.

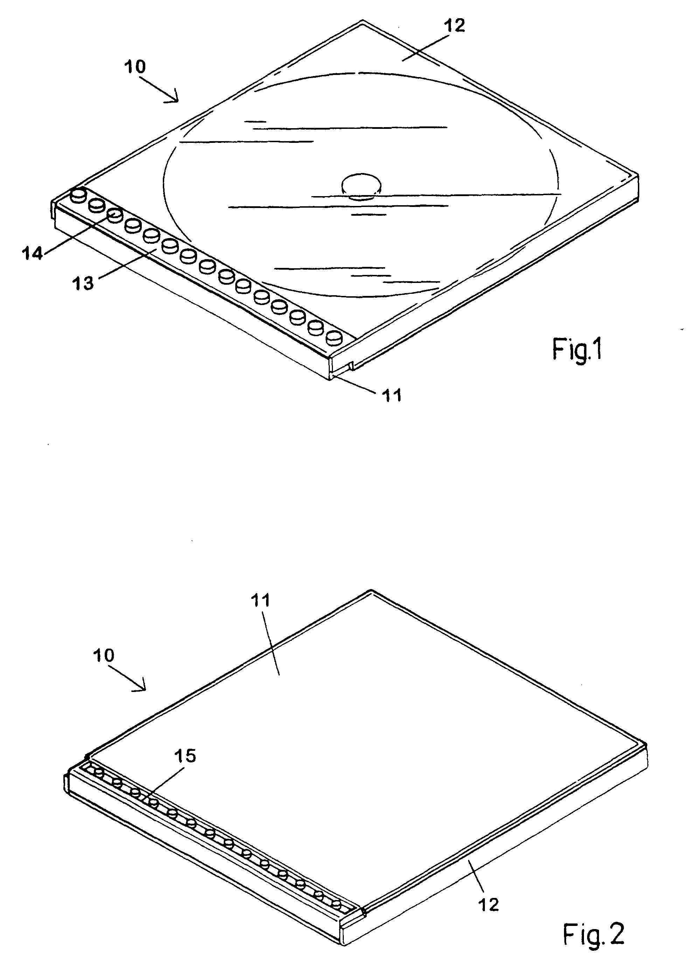

Figures 1 and 2 show a storage box 10, a so-called jewel box, for storing a CD or a CDROM. The box 10 has a base or bottom 11 and a transparent lid 12, which in known manner is hinged to the base and can be opened for removing and inserting a CD or a CDROM. Inserted into its base 11 the box has an insert 13 that is partially uncovered by the lid 12. The insert has known means (not shown) for holding a CD or a CDROM, eg by its centre hole.

The uncovered part of the insert 13 has a surface with a linear row of identical cylindrical studs 14 arranged with a modular or uniform spacing M between the centres of adjacent studs. The bottom wall of the base 11 has a linear row of identical cavities or recesses 15 arranged with the same uniform spacing M between the centres of adjacent cavities. Each cavity 15 is so dimensioned that it can receive a stud 14 in frictional engagement. The studs 14 and the cavities 15 are of the kind which is known from toy building sets of building elements sold under the trademark LEGO ®, but other shapes of the studs such as square or rectangular can also be used with corresponding modifications of the cavities.

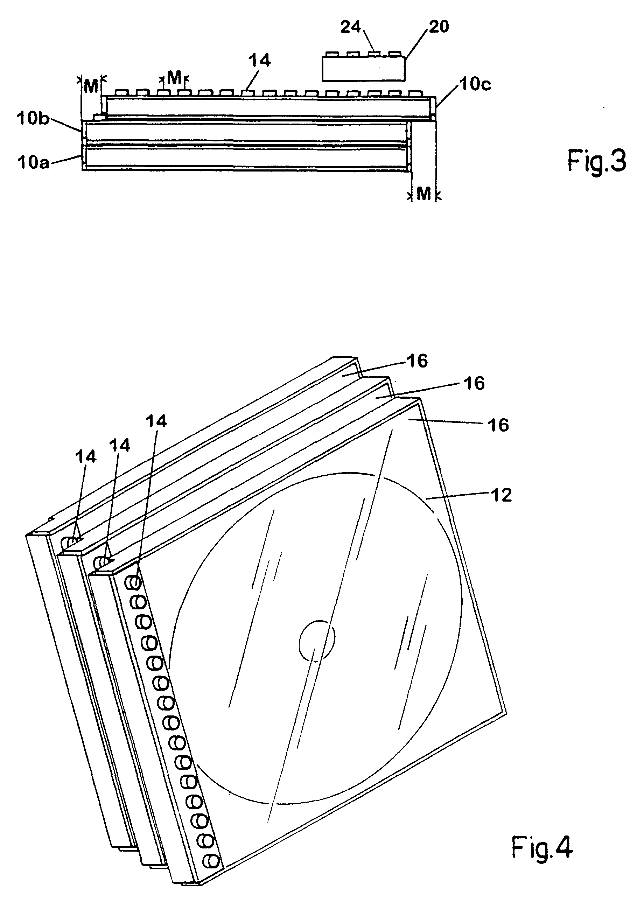

Figure 3 shows how two or more boxes can be stacked with the row of studs 14 on one box 10a received in respective ones of the row of cavities 15 on another box 10b. The boxes 10a and 10b are stacked in vertical alignment with each other, and a high stack of several boxes can be stacked in vertical alignment with each other in a tidy stack that is stable and much less susceptible of toppling than a stack of conventional jewel boxes.

Figure 3 also shows how two boxes 10b and 10c can be offset relative to each other in the stack. The box 10c is offset or shifted relative to the box 10b by the distance M equal to the spacing between the centres of adjacent studs or adjacent cavities. The boxes can also be shifted by two or more times the uniform spacing M.

This feature is particularly useful, as is demonstrated in figure 4 which shows a row of three jewel boxes which, like in figure 3, are interconnected by means of their studs 14 and cavities 15. In figure 4 each box is shifted relative to the adjacent box or boxes by the distance M equal to the spacing between the centres of adjacent studs or adjacent cavities. The row of tilted boxes is held together by the interaction of the studs 14 and the cavities 15, and by properly dimensioning the studs 14 and cavities 15 and their mutual engagement, a row of several boxes can stand on a horizontal surface such as a tabletop without any supplementary means for supporting any of the boxes. A row is thereby self-supported.

Figure 3 furthermore shows a known building block 20 from a known toy building set sold under the trademark LEGO ®. On one side the building block 20 has coupling studs 24 arranged in one or more rows like the coupling studs 14 on the jewel box 10. The coupling studs 24 on the building blocks 20 correspond to the coupling studs 14 on the jewel box 10 and have the same uniform spacing M. On the opposite side the building block 20 has (not shown) cavities, eg such as the cavities 15 on the jewel box 10 or as disclosed in US patent publication number 3 005 282. Two or more building blocks 20 can be stacked with their coupling studs 24 received in cavities on other blocks in a frictional engagement. As indicated, building blocks 20 can then be built onto a jewel box 10 with the coupling studs 14 received in cavities on the blocks 20, and building blocks 20 can also be built onto a jewel box 10 with their coupling studs 24 received in the cavities 15 on the jewel box 10. The jewel box 10 can have the same height as the building blocks 20 or multiples or submultiples thereof, whereby the jewel box can be used as a building block together with the building blocks of the toy building set.

It is seen that on the outside of each lid 12 a portion 16 is hereby left uncovered by the box covering the rest of the lid. The portion 16 of the lid 12 can be used for displaying brief information about the CD or CDROM contained in the jewel box, or a label can be affixed to this portion of the lid. Alternatively, a booklet or sheet, which is usually placed at the inside of the lid, can have such information printed on it, so that it will be visible from the outside. This is particularly useful in retail stores displaying CDs or CDROMs for sale and in public libraries displaying CDs or CDROMs for loan, where the title of each CD or CDROM in the row is displayed so that it is easy to get a quick and full overview over the titles in the row.

## Claims

1. A box (10) for storing a storage medium, comprising
a first side wall and a second side wall, the first and second side walls being parallel,
said first side wall having an outer surface with a plurality of studs (14), and
the second side wall having an outer surface with a plurality of cavities (15) for receiving said studs (14) on an outer surface of a first side wall of another similar box (10),
**characterized in that** the studs (14) and the cavities (15) are at least three in number and are arranged in respective linear rows, in which the studs (14) and the cavities (15) have a uniform spacing (M).

2. A box (10) according to claim 1 wherein the studs (14) are received in said cavities (15) with a friction fit.

3. A box (10) according to claim 1 wherein the plurality of studs (14) and the plurality of cavities (15) permit aligned stacking of a plurality of such boxes (10).

4. A box (10) according to claim 1 wherein the plurality of studs (14) and the plurality of cavities (15) permit offset stacking of a plurality of such boxes (10).

## Patentansprüche

1. Kasten (10) zum Lagern eines Speichermediums, umfassend:
eine erste Seitenwand und eine zweite Seitenwand, wobei die erste und zweite Seitenwand parallel sind,
wobei die erste Seitenwand eine Außenfläche mit einer Mehrzahl von Stiften (14) aufweist, und
die zweite Seitenwand eine Außenfläche mit einer Mehrzahl von Hohlräumen (15) zum Aufnehmen der genannten Stifte (14) an einer Außenfläche einer ersten Seitenwand eines anderen, ähnlichen Kastens (10) aufweist,
**dadurch gekennzeichnet, dass** die Stifte (14) und die Hohlräume (15) in einer Anzahl von wenigstens drei vorliegen und in jeweiligen linearen Reihen angeordnet sind, in denen die Stifte (14) und die Hohlräume (15) einen einheitlichen Abstand (M) aufweisen.

2. Kasten (10) nach Anspruch 1, bei dem die Stifte (14) in den genannten Hohlräumen (15) mit einem Reibungssitz aufgenommen werden.

3. Kasten (10) nach Anspruch 1, bei dem die Mehrzahl von Stiften (14) und die Mehrzahl von Hohlräumen (15) Stapeln in einer Linie der Mehrzahl solcher Kästen (10) zulässt.

4. Kasten (10) nach Anspruch 1, bei dem die Mehrzahl von Stiften (14) und die Mehrzahl von Hohlräumen (15) versetztes Stapeln einer Mehrzahl solcher Kästen (10) zulassen.

## Revendications

1. Boîtier (10) pour stocker un support d'enregistrement comprenant
une première paroi latérale et une seconde paroi latérale, la première et la seconde paroi latérales étant parallèles,
ladite première paroi latérale ayant une surface extérieure munie d'une pluralité de pions (14), et
la seconde paroi latérale ayant une surface extérieure munie d'une pluralité de cavités (15) pour recevoir lesdits pions (14) sur une surface extérieure d'une première paroi latérale d'un autre boîtier similaire (10),
**caractérisé en ce que** les pions (14) et les cavités (15) sont au nombre d'au moins trois et sont disposés en rangées linéaires respectives, dans lesquelles les pions (14) et les cavités (15) ont un espacement uniforme (M).

2. Boîtier (10) selon la revendication 1 dans lequel les pions (14) sont reçus dans lesdites cavités (15) avec ajustement par friction.

3. Boîtier (10) selon la revendication 1 dans lequel la pluralité de pions (14) et la pluralité de cavités (15) permettent un empilement aligné d'une pluralité de tels boîtiers (10).

4. Boîtier (10) selon la revendication 1 dans lequel la pluralité de pions (14) et la pluralité de cavités (15) permettent un empilement décalé d'une pluralité de tels boîtiers (10).
